# FASCICULE DE BREVET EUROPEEN

(11) **EP 1 360 366 B1**
(45) Date de publication et mention de la délivrance du brevet: **29.12.2004**
(21) Numéro de dépôt: 01956602.5
(22) Date de dépôt: 18.07.2001
(51) Int. Cl.: D06N 7/00, D06N 3/06, E04F 15/10, B32B 5/26

(54) **REVETEMENT DE SOL EN MATIERE PLASTIQUE ET PROCEDE POUR SON OBTENTION**
FUSSBODENBELAG AUS PLASTISCHEM MATERIAL UND VERFAHREN ZU DEREN HERSTELLUNG
PLASTIC FLOOR COVERING AND METHOD FOR OBTAINING SAME

(30) Priorité: 27.07.2000 FR 0009841
(43) Date de publication de la demande: 12.11.2003
(73) Titulaire: GERFLOR, 69100 Villeurbanne (FR)
(72) Inventeur: PLUSQUELLEC, Paul, F-26130 Saint Paul Trois Chateaux (FR); DOGNETON, Gilles, F-26790 Suze la Rousse (FR)
(74) Mandataire: Dupuis, François
(86) Numéro de dépôt international: PCT/FR2001/002330
(87) Numéro de publication internationale: WO 2002/010504

(56) Documents cités:
- EP-A- 0 831 166
- FR-A- 2 557 905
- FR-A- 2 675 178
- US-A- 4 698 258
- US-A- 4 772 500
- DATABASE WPI Section Ch, Week 198832 Derwent Publications Ltd., London, GB; Class A18, AN 1988-222743 XP002165500 & JP 63 156149 A (TOYO LINOLEUM KK), 29 juin 1988 (1988-06-29)

## Description

### Domaine Technique

La présente invention a trait à un nouveau type de revêtement de sol en matière plastique, ainsi qu'à un procédé perfectionné pour son obtention.

Elle a trait plus particulièrement à un revêtement de sol fabriqué selon la technique dite "par enduction", qui présente des propriétés de confort à la marche, d'isolations acoustique et thermique, de résistance mécanique, de. planéité, améliorées par rapport aux produits antérieurs.

### Techniques antérieures

Il a été proposé depuis fort longtemps de réaliser des revêtements de sol souples, en matière plastique.

D'une manière générale, de tels revêtements sont constitués d'une structure de base en matière thermoplastique, souvent renforcée par un matériau textile noyé dans la masse de ladite matière.

Par ailleurs, pour améliorer le confort et conférer des caractéristiques d'isolation, souplesse au revêtement, celui-ci peut être associé sur sa face envers à une sous-couche, par exemple une sous-couche en mousse.

De plus, la face apparente est recouverte d'une couche de finition, conférant à l'ensemble des propriétés spécifiques, telles que résistance aux UV, tenue à l'encrassement, à la rayure, au trafic, à l'abrasion ...

Ces revêtements de sol peuvent être fabriqués par différentes techniques, telles que enduction, calandrage ou pressage.

Pour la réalisation de revêtement de sol par la technique d'enduction, on réalise un support de base en imprégnant une structure textile de renforcement, constituée en général par un non tissé, cette structure étant très souvent à base de fibres de verre, mais également à base de polymères synthétiques, tels que fibres de polyester, polyamide ou polypropylène.

L'enduction est réalisée à partir d'une composition de plastisols, le plus souvent à base de PVC, mais pouvant être également à base d'acryliques, de polyuréthannes, de polyoléfines, permettant d'obtenir une surface lisse et plane.

Après formation du support de base, on réalise la ou les couches superficielles destinées à apporter le décor et la résistance à l'usure, ainsi que la couche d'envers, permettant d'assurer la finition (cas des couches compactes) ou le confort et/ou l'isolation, par association à une sous-couche à base de mousses mécaniques ou chimiques.

Outre les revêtements de sol dont la surface apparente est plane, il a été proposé, depuis des décennies, comme cela ressort notamment du GB-A.1 520 964, de l'US-A-3 399 106, de l'US-A -4 244 899, de l'EP-A-0 003 965 et de FR 2 557 905, de réaliser des revêtements de sol présentant des effets en relief, qui consistent, lors de la fabrication, à interposer entre la structure de base imprégnée de résine, et les couches de surface, une couche de mousse chimique, sur laquelle on imprime un décor à partir d'encres dont certaines contiennent des inhibiteurs d'expansion.

Après application de la couche d'usure sur le décor ainsi réalisé, on gélifie l'ensemble des couches, ce qui provoque une expansion différente entre les zones imprimées inhibées et celles imprimées non inhibées, entraînant la production d'un décor en relief, l'expansion étant moindre dans les zones imprimées inhibées.

De tels revêtements de sol, qui ont connu.un très grand développement, sont couramment utilisés de nos jours, présentent cependant des caractéristiques d'isolation acoustique et thermique jugées parfois insuffisantes.

Pour résoudre ce problème, la seule proposition envisagée a donc consisté à rapporter sur la face envers une couche de mousse mécanique ou chimique, qui, dans le cas d'utilisation de mousse de basse densité, peut être préjudiciable à la solidité du revêtement et est parfois mal perçue par un acheteur potentiel, compte tenu du toucher plastique qu'apporte une telle sous-couche.

Le confort à la marche est parfois jugé insuffisant, ce confort étant la résultante de plusieurs effets, tels que la sensation de moelleux (enfoncement instantané) qui doit être maximale, et des propriétés d'anti-choc (décélération progressive) et d'antirebond (vitesse de rebond nulle).

### Exposé d'invention

Or, on a trouvé, c'est ce qui fait l'objet de la présente invention, un perfectionnement apporté aux revêtements de sol, réalisés par enduction, et comportant une structure de base en matière thermoplastique, PVC plastifié notamment, renforcée par une armature textile, éventuellement associée à une sous-couche en mousse et dont la face apparente est constituée par un revêtement de surface, conférant le décor et la résistance à l'usure de l'article.

Le matériau selon l'invention se caractérise en ce que la face envers destinée à être en contact avec le sol est constituée par une nappe textile, de préférence du type non tissé, la liaison entre la structure textile et la face envers du support de base étant réalisée par l'intermédiaire d'une couche additionnelle de plastisol qui pénètre, sur une partie minoritaire de l'épaisseur de la structure textile et qui, après gélification, assure la solidarisation de ce textile à l'envers du support de base en matière thermoplastique.

Selon une première forme de réalisation, la structure textile est fixée directement contre la face envers du support de base, et ce par l'intermédiaire d'une couche de plastisol de lissage de cette face.

Lorsque le revêtement de sol comporte, sur sa face envers, une couche de mousse, la liaison de la structure textile est obtenue par l'intermédiaire d'une couche de plastisol.

Par ailleurs, si le revêtement de sol conforme à l'invention peut présenter une couche de surface plane, cette couche de surface peut éventuellement comporter des motifs en relief, obtenus par expansion localisée d'une couche de mousse interposée entre le support de base et la ou les couche(s) de surface.

Il est à noter que, conformément à l'invention, la feuille textile ou le non tissé présent sur la face envers du support, n'est que partiellement noyée dans la couche plastique, assurant sa liaison à l'envers du revêtement, et ce de manière à conserver le toucher textile et les caractéristiques de cette nappe.

D'une manière générale, l'imprégnation par la couche de plastisol est de l'ordre de 0,5 à 15 % de l'épaissseur totale du textile, de préférence entre 3 et 10 %.

La structure textile destinée à former l'envers du revêtement, sera de préférence un non tissé, de préférence aiguilleté et formé avantageusement de fibres de polyester.

Eventuellement, ce non tissé peut être calandré et/ou thermolié, son épaisseur étant comprise entre 0,5 et 5 millimètres, et de préférence entre 1 et 2 millimètres.

En effet, il a été constaté qu'une épaisseur inférieure à 0,5 millimètres conduit à une pénétration relative de l'imprégnation du plastisol de liage trop importante, affectant non seulement le toucher textile de la face envers, mais également les caractéristiques additionnelles d'isolation et de confort qu'apportent une telle structure textile.

En revanche, une épaisseur supérieure à 5 millimètres n'améliore pas de manière significative les caractéristiques du produit, et surtout entraîne une augmentation importante des coûts.

Le poids au mètre carré du non tissé rapporté sur la face envers peut être compris entre 40 et 500 grammes, mais sera avantageusement compris entre 80 et 300 grammes. Sa capacité d'allongement est comprise entre 30 et 120 %.

L'invention concerne également un procédé pour la réalisation d'un tel revêtement.

De manière générale conformément à l'invention, lors d'une première phase opératoire, on réalise de manière conventionnelle une structure de base par imprégnation, d'une armature textile de renfort, voile de verre par exemple, avec un plastisol PVC ou acrylique ou une polyoéléfine que l'on prégélifie par traitement thermique.

En continu, et après impression, lors d'une seconde phase opératoire, on réalise ensuite un revêtement de surface.

Conformément à l'invention, et de préférence en continu avec les opérations précitées, on applique sur la face envers du complexe ainsi réalisé, une couche de liaison à base d'un plastisol PVC, acrylique, ou polyoéléfine ou autre polymère, et on applique contre cette couche humide une nappe textile, de préférence constituée par un non tissé, en exerçant une pression permettant d'imprégner partiellement ladite nappe sur son épaisseur de plastisol. La pression exercée est en général comprise entre 0,1 et 4 bars au maximum.

L'ensemble est ensuite gélifié par traitement thermique, ce qui permet d'obtenir le complexe final, la phase de gélification ou réchauffage assurant l'accrochage de la structure textile à l'envers, avec la partie plastique.

Un tel procédé peut être mis en oeuvre soit pour réaliser des revêtements de sol dont le décor de surface est plat, mais également peut être appliqué pour la réalisation d'un revêtement de sol comportant un décor en relief.

Dans un tel cas, après imprégnation du textile de renfort avec un plastisol et prégélification de ce dernier, par exemple sur un tambour chauffé à 135°C, on enduit la surface de cette structure de base d'une mousse chimique "décor" à base également de PVC ou d'acrylique ou de polyoéléfine. Cette mousse chimique est également gélifiée à 140°C pour donner une feuille souple présentant une surface lisse sur laquelle on imprime alors un décor à partir d'encres dont certaines contiennent des inhibiteurs d'expansion.

On applique ensuite la couche d'usure sur le décor et on gélifie l'ensemble des couches dans un four par traitement thermique à 195°C.

La mousse chimique "décor" s'expanse également dans cette étape.

### Manière de réaliser l'invention

L'invention et les avantages qu'elle apporte sera cependant mieux compris grâce aux exemples concrets donnés ci-après à titre indicatif mais non limitatif.

Ces exemples portent sur des revêtements de sol comportant un décor de surface en relief, réalisés conformément aux enseignements des brevets US 3 399 106 ou EP 0 003 965, mais il est évident que cela n'est pas limitatif.

Les formulations, données en partie en poids, des différentes compositions de plastisols entrant dans la réalisation des revêtements de sol donnés en exemple, sont regroupées dans le tableau ci-après.

Par ailleurs, les caractéristiques des revêtements réalisés sont déterminées de la manière suivante :
◆ isolation acoustique : mesurée selon la norme ISO 140-8 et ISO 717-2,
◆ température : mesurée au test du froid aux pieds.

Un tel test est réalisé dans un local maintenu à 23°C, plus ou moins 1°C, sur un banc réfrigéré dont la température est maintenue à 0°C.

Le revêtement de sol est appliqué sur ce banc et on mesure la température à sa surface supérieure après 30 minutes.

Plus la température est élevée, plus l'isolation thermique est importante et plus la sensation de froid aux pieds est atténuée.
◆ Confort à la marche : mesuré d'après la norme NFP 90-104 et la norme NFP 90-203 et évalué par le "moelleux" sous la forme d'un enfoncement spontané.

| | ***COMPLEXE DE BASE (A)*** | | | | | |
|---|---|---|---|---|---|---|
| | ***Imprégnation*** | ***Mousse chimique décor*** | ***Couche d'usure*** | ***Lissage*** | ***Mousse chimique envers*** | ***Mousse mécanique envers*** |
| PVC émulsion K 80 (*) | 0 | 0 | 85 | 0 | 0 | 0 |
| PVC microsuspension K80(*) | 0 | 0 | 35 | 50 | 0 | |
| PVC suspension K 100 (*) | 0 | 0 | 40 | 0 | 0 | 0 |
| PVC émulsion K 75(*) | 75 | 0 | 0 | 30 | 0 | 60 |
| PVC émulsion K 70 (*) | 0 | 95 | 0 | 0 | 0 | 0 |
| PVC émulsion K 65 (*) | 0 | 0 | 0 | 0 | 55 | |
| PVC suspension K 65 (*) | 0 | 30 | 0 | 20 | 0 | 40 |
| PVC émulsion K 60 (*) | 0 | 0 | 0 | 0 | 52.5 | 0 |
| Dioctylphtalate | 55 | 60 | 27.2 | 0 | 22.2 | 27.6 |
| Butylbenzylphtalate | 0 | 0 | 40.3 | 0 | 38.7 | 0 |
| Diisoheptylphtalate | 0 | 0 | 0 | 42.6 | 0 | 27.8 |
| Dodécylbenzène | 0 | 4.2 | 8.4 | 7.5 | 4.2 | 10.4 |
| Stabilisant étain | 0.4 | 0 | 4.5 | 0.8 | 0 | 0.5 |
| Huile de soja époxydée | 0 | 0 | 5.6 | 0 | 0 | 0 |
| Dioxyde de Titane | 2.5 | 0.3 | 0 | 0 | 0 | 0 |
| Oxyde de Zinc | 0 | 1.2 | 0 | 0 | 13 | 0 |
| Carbonate de Ca 6 µm | 20 | 0 | 0 | 15 | 0 | 0 |
| Carbonate de Ca 15 µm | 70 | 30 | 0 | 55 | 60 | 30 |
| Agent mouillant | 1.1 | 0.1 | 0.3 | 2.2 | 0 | 0 |
| Anti UV | 0 | 0 | 0.3 | 0 | 0 | 0 |
| Agent gonflant | 0 | 2.4 | 0 | 0 | 6 | 0 |
| Agent moussant | 0 | 0 | 0 | 0 | 0 | 2.5 |
| Fongicide | 0 | 0 | 0 | 0 | 3.6 | 0 |

| | | | | | | |
|---|---|---|---|---|---|---|
| *(*) K = Kwert* | | | | | | |

### Exemple 1

Cet exemple illustre la réalisation par enduction d'un revêtement de sol conventionnel.

On enduit un voile à base de fibres de verre ayant une épaisseur de 0,4 millimètres et pesant 40 grammes par mètre carré et ce, à raison de 390 grammes par mètre carré d'un plastisol PVC chargé dont la formulation en parties en poids ressort de la colonne "Imprégnation".

Le voile ainsi imprégné passe ensuite sur un tambour chauffant à 135°C pour en assurer la prégélification.

La feuille souple ainsi produite est alors enduite en surface d'une couche d'une mousse chimique dite "décor" à base d'un plastisol PVC, à raison de 320 grammes par mètre cané.

La structure enduite est alors prégélifiée dans un four à 140° C.

Elle est ensuite imprimée par héliographie avec des encres pouvant contenir des inhibiteurs afin de réaliser un relief registré avec le décor.

On applique alors une couche d'usure sur la surface imprimée, couche à base d'un plastisol PVC non chargé, et ce à raison de 230 grammes par mètre carré, et on gélifie l'ensemble des couches dans un four à 190°C.

La chaleur réalise également l'expansion de la mousse "décor" pour donner des effets de relief.

On obtient ainsi un complexe de base A.

Pour la réalisation d'un revêtement conventionnel, après expansion de la mousse "décor", on réalise un traitement de finition de la face envers par enduction sur l'envers d'une couche d'un plastisol de PVC dit de "lissage", réalisé à raison de 490 grammes par mètre carré dont la formulation, en partie en poids ressort du tableau qui précéde.

Ainsi préparé, le revêtement de sol a une épaisseur de 2 millimètres et pèse 1720 grammes par mètre carré.

Un tel revêtement de sol est parfaitement plat, l'envers constitué du compact de lissage présentant un toucher lisse.

Il présente les principales caractéristiques suivantes :
◆ isolation acoustique : 7 décibels (dB),
◆ isolation thermique : mesurée selon le test dit "du froid aux pieds" : 4°C,
◆ le confort à la marche n'est pas mesurable en raison de la raideur du produit.

### Exemple 2

Cet exemple illustre la réalisation d'un revêtement de sol conformément à l'invention.

Par rapport au revêtement de sol réalisé de manière conventionnelle selon l'exemple 1, conformément à l'invention, on enduit la face envers du complexe A avec une composition d'un plastisol PVC de lissage, également à base d'un plastisol PVC de lissage (voir formule du tableau) mais à raison seulement de 160 grammes par mètre carré, et on déroule sur le plastisol encore humide une feuille de non tissé textile polyester thermoliée, pesant 125 grammes par mètre carré, et ayant une épaisseur de 1,1 millimètres.

On applique une pression de 1 bar à l'aide d'un cylindre presseur dont la force est régulée pour permettre une légère pénétration du plastisol dans l'épaisseur du non tissé.

L'ensemble est alors introduit dans un four à 180°C pour assurer la gélification finale et l'accrochage du non tissé.

Le revêtement de sol ainsi préparé a une épaisseur de 2 millimètres environ, et pèse 1215 grammes par mètre carré. Il est parfaitement plan. L'envers constitué du non tissé textile présentant un toucher doux, agréable et chaud.

Le plastisol PVC pénètre sur une épaisseur d'environ 0,08 millimètres dans l'épaisseur du non tissé textile.

Par rapport au revêtement conventionnel de l'exemple 1, ne comportant qu'une couche de lissage sur sa face envers, le revêtement conforme à l'invention présente une isolation acoustique mesurée selon les mêmes normes de 16 décibels (dB), c'est-à-dire très nettement supérieure.

En plus, la température mesurée au test du froid, est quant à elle de 10°C, c'est-à-dire nettement supérieure, et le confort à la marche est évalué par le moelleux sous la forme d'un enfoncement instantané de 1,15 millimètres.

### Exemple 3

Cet exemple illustre une seconde forme de mise en oeuvre de l'invention.

Dans une première phase, on réalise un complexe A similaire à celui de l'exemple 1, et comportant un voile de verre imprégné, une mousse chimique de décor, et une couche d'usure identique.

Après réalisation de ce complexe; la face envers est enduite d'un plastisol mousse chimique dont la formulation ressort du tableau qui précède.

Sur cette couche de mousse expansée et calibrée, on dépose une couche de plastisol de liaison sur laquelle on déroule une feuille d'un non tissé textile à base de polyester, thermolié, pesant 125 grammes par mètre carré, ayant une épaisseur de 1,1 millimètres.

On applique également une pression à 1 bar pour permettre une légère pénétration du plastisol dans le non tissé.

L'ensemble est également introduit dans un four à 180°C pour assurer la gélification et l'accrochage du non tissé.

Le revêtement de sol ainsi préparé présente une épaisseur de 3 millimètres et un poids de 1360 grammes par mètre carré.

Il est parfaitement plan.

L'envers constitué du non tissé textile présente un toucher doux, agréable et chaud.

Le plastisol PVC a pénétré de 0,08 millimètres dans l'épaisseur du non tissé textile.

L'isolation acoustique mesurée est de 19 décibels (dB).

La température mesurée au test du froid aux pieds est de 15°C.

Le confort à la marche est évalué par le moelleux sous la forme d'un enfoncement instantané de 1,32 millimètres.

### Exemple 4

Cet exemple illustre, à titre comparatif, les caractéristiques que présente un revêtement de sol conventionnel comportant en sous-couche une mousse mécanique PVC.

On répète l'exemple 1 si ce n'est qu'au lieu de réaliser un traitement de finition de la face envers au moyen d'un plastisol de lissage, on enduit cette face d'un plastisol mousse mécanique PVC, à raison de 980 grammes par mètre carré (voir formule du tableau).

L'ensemble est introduit dans un four à 180°C pour assurer la gélification.

On obtient un revêtement de sol ayant une épaisseur de 3 millimètres et pesant 2145 grammes par mètre carré.

Ce revêtement de sol est parfaitement plan, mais son envers constitué de mousse mécanique présente un aspect lisse et un toucher plastique.

L'isolation acoustique est de 15 décibels (dB).

La température mesurée au test du froid aux pieds et de 5°C, c'est-à-dire nettement inférieure à celle du revêtement réalisé conformément à l'invention.

Le confort à la marche est évalué par le moelleux sous la forme d'un enfoncement instantané de 1,01 millimètres, c'est-à-dire nettement inférieur de celui obtenu conformément à l'invention selon l'exemple 3, et ce malgré une épaisseur de mousse beaucoup plus importante.

Les exemples qui précèdent montrent bien les avantages apportés par l'invention, à savoir que non seulement on obtient une très bonne isolation acoustique, et une amélioration du test du froid aux pieds, ainsi qu'un excellent confort à la marche et moelleux, l'envers constitué du non tissé textile permettant d'obtenir également un ensemble présentant un toucher doux, agréable et chaud.

La présence de l'envers textile permet également la mise en oeuvre du revêtement par tout système préconisé pour les revêtements textiles, notamment les systèmes du type auto-agrippant.

## Revendications

1. Revêtement de sol réalisé par enduction et comportant une structure de base en matière thermoplastique, PVC plastifié notamment, renforcé par une armature textile, éventuellement associé à une sous-couche en mousse et dont la face apparente est constituée par un revêtement de surface conférant le décor et la résistance à l'usure de l'article **caractérisé en ce que** la face envers destinée à être en contact avec le sol, est constituée par une nappe textile, la liaison entre la structure textile et la surface envers du support de base étant réalisée par l'intermédiaire d'une couche additionnelle de plastisol, qui pénètre sur une partie minoritaire de l'épaisseur de la structure textile et qui, après gélification, assure la solidarisation de ce textile à l'envers du support de base en matière thermoplastique.

2. Revêtement de sol selon la revendication 1, **caractérisé en ce que** la nappe textile est un non tissé.

3. Revêtement de sol selon l'une des revendications 1 et 2, **caractérisé en ce que** la structure textile est fixée contre la face envers du support de base par l'intermédiaire d'une couche de plastisol de lissage de cette face.

4. Revêtement de sol selon l'une des revendications 1 et 2, **caractérisé en ce qu'**il comporte, sur sa face envers une couche de mousse, la liaison de la structure textile à cette couche de mousse étant obtenue par intermédiaire d'une couche de plastisol d'une mousse chimique de même nature que cette dernière.

5. Revêtement de sol selon l'une des revendications 1 à 4, **caractérisé en ce que** la couche de surface comporte des motifs en relief obtenus par expansion localisée d'une couche de mousse interposée entre le support de base et la/les couches de surface.

6. Revêtement de sol selon l'une des revendications 1 à 5, **caractérisé en ce que** l'imprégnation de la structure textile par la couche de plastisol est réalisée sur une épaisseur de 0,5 à 15 % de l'épaisseur totale du textile.

7. Procédé pour la réalisation d'un revêtement de sol selon l'une des revendications 1 à 6, qui consiste à réaliser de manière conventionnelle une structure de base par imprégnation d'une armature textile de renfort avec un plastisol, PVC notamment, puis à réaliser un revêtement de surface **caractérisé en ce que**, en continu avec les opérations précitées, on applique sur la face envers du complexe ainsi réalisé une couche de liaison à base de plastisol, et qu'on applique contre cette couche humide, une nappe textile en exerçant une pression permettant d'imprégner partiellement de plastisol ladite nappe sur son épaisseur, l'ensemble étant ensuite gélifié par traitement thermique.

## Patentansprüche

1. Fußbodenbelag, welcher durch Beschichtung erhalten wird und eine Grundstruktur aufweist aus thermoplastischem Material, insbesondere Weich-PVC, verstärkt durch eine Gewebeeinlage, gegebenenfalls verbunden mit einer Unterschicht aus Schaumstoff, und dessen sichtbare Seite gebildet ist aus einem Oberflächenbelag, welcher dem Gegenstand das Dekor und die Widerstandsfähigkeit gegen Abnutzung verleiht, **dadurch gekennzeichnet, dass** die Rückseite, die dazu bestimmt ist, mit dem Boden in Kontakt zu sein, durch eine Gewebelage gebildet ist, wobei die Verbindung zwischen der Gewebestruktur und der Rückseite des Grundträgers realisiert ist mittels einer zusätzlichen Schicht aus Plastisol, die in einen kleineren Teil der Dicke der Gewebestruktur eindringt und die nach Erstarrung den Zusammenschluss dieses Gewebes mit der Rückseite des Grundträgers aus thermoplastischem Material sicherstellt.

2. Fußbodenbelag gemäß Anspruch 1, **dadurch gekennzeichnet, dass** die Gewebelage ein Vliesstoff ist.

3. Fußbodenbelag gemäß einem der Ansprüche 1 oder 2, **dadurch gekennzeichnet, dass** die Gewebestruktur an der Rückseite des Grundträgers befestigt ist mittels einer Glättungsschicht aus Plastisol dieser Seite.

4. Fußbodenbelag gemäß einem der Ansprüche 1 oder 2, **dadurch gekennzeichnet, dass** dieser auf seiner Rückseite eine Schicht aus Schaumstoff aufweist, wobei die Verbindung der Gewebestruktur mit dieser Schaumstoffschicht erhalten wird mittels einer Schicht aus Plastisol eines chemischen Schaumstoffs der gleichen Art wie der letztgenannten.

5. Fußbodenbelag gemäß einem der Ansprüche 1 bis 4, **dadurch gekennzeichnet, dass** die Oberflächenschicht Reliefmuster aufweist, die erhalten werden durch stellenweises Dehnen einer Schaumstoffschicht, die zwischen den Grundträger und die Oberflächenschicht/en zwischengelegt ist.

6. Fußbodenbelag gemäß einem der Ansprüche 1 bis 5, **dadurch gekennzeichnet, dass** die Imprägnierung der Gewebestruktur mit der Schicht aus Plastisol auf einer Dicke von 0,5 bis 15 % der Gesamtdicke des Gewebes durchgeführt wird.

7. Verfahren zur Herstellung eines Fußbodenbelags gemäß einem der Ansprüche 1 bis 6, welches darin besteht, auf herkömmliche Weise eine Grundstruktur herzustellen, indem eine zur Verstärkung bestimmte Gewebeeinlage mit einem Plastisol imprägniert wird, insbesondere mit PVC, dann ein Oberflächenbelag hergestellt wird, **dadurch gekennzeichnet, dass** in Fortsetzung zu den vorgenannten Vorgängen auf die Rückseite des so hergestellten Komplexes eine Verbindungsschicht auf Basis von Plastisol aufgebracht wird, dass auf diese nasse Schicht eine Gewebelage aufgebracht wird, indem ein Druck ausgeübt wird, der es ermöglicht, die Lage in ihrer Dicke teilweise mit Plastisol zu imprägnieren, und dass das Ganze dann durch Wärmebehandlung zum Erstarren gebracht wird.

## Claims

1. Floor covering produced by coating, which comprises a base structure made of a thermoplastic, especially a plasticized PVC, reinforced by a textile reinforcement and optionally combined with a foam underlayer, and the visible side of which consists of a surface coating giving the decoration and the wear resistance of the article, **characterized in that** the reverse side intended to be in contact with the floor consists of a textile web, the textile structure being tied to the reverse side of the base support via an additional layer of plastisol, which penetrates over a small proportion of the thickness of the textile structure and which, after gelling, ensures that this textile is bonded to the reverse side of the thermoplastic base support.

2. Floor covering according to Claim 1, **characterized in that** the textile web is a nonwoven.

3. Floor covering according to either of Claims 1 and 2, **characterized in that** the textile structure is fastened to the reverse side of the base support via a layer of plastisol for smoothing this side.

4. Floor covering according to either of Claims 1 and 2, **characterized in that** it includes, on its reverse side, a foam layer, the textile structure being tied to this foam layer via a plastisol layer of a chemical foam of the same nature as the latter.

5. Floor covering according to one of Claims 1 to 4, **characterized in that** the surface layer includes features in relief that are obtained by localized expansion of a foam layer interposed between the base support and the surface layer(s).

6. Floor covering according to one of Claims 1 to 5, **characterized in that** the textile structure is impregnated by the plastisol layer over a thickness of 0.5 to 15% of the total thickness of the textile.

7. Process for producing a floor covering according to one of Claims 1 to 6, which consists in producing a base structure in a conventional manner by impregnating a textile reinforcement with a plastisol, especially a PVC plastisol, and then in producing a surface coating, **characterized in that** a plastisol-based tie layer is applied, continuously with the aforementioned operations, to the reverse side of the complex thus produced and a textile web is applied against this wet layer by exerting pressure, allowing the plastisol to impregnate the said web partly over its thickness, the whole assembly then being gelled by a heat treatment.
